# EUROPÄISCHE PATENTSCHRIFT

(11) **EP 2 995 391 B1**
(45) Veröffentlichungstag und Bekanntmachung des Hinweises auf die Patenterteilung: **08.08.2018**
(21) Anmeldenummer: 15184997.3
(22) Anmeldetag: 14.09.2015
(51) Int. Cl.: B21D 5/00, B21D 5/02, G01B 11/26

(54) **KALIBRIERVERFAHREN FÜR EINE BIEGEMASCHINE UND SOLCHE BIEGEMASCHINE**
CALIBRATION METHOD FOR A BENDING MACHINE AND SUCH A BENDING MACHINE
PROCEDE D'ETALONNAGE POUR UNE CINTREUSE ET UNE TELLE CINTREUSE

(30) Priorität: 15.09.2014 AT 506432014
(43) Veröffentlichungstag der Anmeldung: 16.03.2016
(73) Patentinhaber: TRUMPF Maschinen Austria GmbH & Co. KG., 4061 Pasching (AT)
(72) Erfinder: LEEB, Sebastian, 4040 Linz (AT); LUSTIG, Stefan, 4060 Leonding (AT)
(74) Vertreter: Burger, Hannes

(56) Entgegenhaltungen:
- EP-A1- 2 719 475
- EP-B1- 1 102 032
- WO-A2-2011/050383
- US-A- 5 488 470

## Beschreibung

Die Erfindung betrifft ein Kalibrierverfahren für eine Biegemaschine mit einer Biegewinkel-Messvorrichtung, insbesondere einer kontaktlos wirkenden Biegewinkel-Messvorrichtung und eine Biegemaschine mit einer Biegewinkel-Messvorrichtung, zur Durchführung eines solchen Kalibrierverfahrens. Beim Biegen von Blechteilen, insbesondere beim Freibiegen und Schwenkbiegen, aber auch beim Prägebiegen, kann es aufgrund von Schwankungen der Materialparameter dazu kommen, dass der geforderte Biegewinkel nicht eingehalten wird. Gemäß einem mathematischen Modell der Biegeumformung kann aus den Materialparametern, im Wesentlichen der Härte des Materials und der Blechdicke, sowie Kenntnis der Biegewerkzeuganordnung, die Biegekraft bzw. der Verschwenkwinkel berechnet werden, der mit diesen der Soll-Materialparameter zum gewünschten Biegewinkel führt. Da es real jedoch immer wieder zu geringfügigen Schwankungen dieser Materialparameter kommen wird, würde bei Beibehaltung der ermittelten Biegeparameter, ein abweichender Biegewinkel gebogen.
Daher ist es von Vorteil, wenn während des laufenden Biegevorganges der aktuell erreichte Biegewinkel ermittelt werden kann, um bei Erreichen des gewünschten Biegewinkels, den Biegevorgang zu beenden.
Dazu ist beispielsweise aus der EP 1 102 032 B1 ein Verfahren bekannt, bei dem mittels eines optischen Beleuchtungs- und Erfassungssystems Abstandspunkte zwischen dem Messsystem und der sich aufbiegenden Blechoberfläche ermittelt werden. Aus diesem Abstandsprofil wird der aktuell gebildete Biegewinkel ermittelt.
Der Nachteil dieses bekannten Verfahrens liegt nun darin, dass die Abstände zwischen dem Messinstrument und der Blechoberfläche im Bezug zum Koordinatensystem des Messinstruments bestimmt werden. Dabei wird davon ausgegangen, dass sich das Koordinatensystem des Messinstruments und das Koordinatensystem der Biegemaschine in fester Relation zueinander befinden. Insbesondere wird davon ausgegangen, dass sich die ursprüngliche, bei Inbetriebnahme der Biegemaschine hergestellte Koordinatenzuordnung zwischen der Biegemaschine und dem Messinstrument nicht geändert hat. Um den Winkel des sich aufbiegenden Bleches bestimmen zu können, wird die Biegewinkel-Messvorrichtung im Arbeitsbereich der Biegemaschine und insbesondere im Schwenkbereich des sich aufbiegenden Bleches angeordnet sein müssen. In diesem Bereich besteht für die Biegewinkel-Messvorrichtung auch beim bestimmungsgemäßen Einsatz stets die Gefahr, dass sich die ursprünglich festgelegte Zuordnung des Koordinatensystems der Biegemaschine und des Koordinatensystems der Biegewinkel-Messvorrichtung ändert. Beispielsweise kann beim Einlegen des Bleches in die Werkzeuganordnung dieses an der Biegewinkel-Messvorrichtung anstoßen und somit die festgelegte Zuordnung ändern, ohne dass dies augenscheinlich sofort in Erscheinung tritt. Auch kann es durch Erschütterungen vorkommen, dass sich die gegenüber der Biegemaschine kleine und leichte Biegewinkel-Messvorrichtung in ihrer Ausrichtung gegenüber der Biegemaschine ändert. Eine Änderung der Relativposition zwischen Biegewinkel-Messvorrichtung und Biegemaschine führt jedoch unmittelbar auch zur Bildung fehlerhafter Biegewinkel und, obwohl von der Biegewinkel-Messvorrichtung ein vermeintlich korrekter Biegewinkel ermittelt wird.

Die Aufgabe der Erfindung liegt nun darin, ein Verfahren und eine Biegemaschine zur Bestimmung des Biegewinkels während des Biegevorgangs, dahingehend zu verbessern, dass stets eine korrekte Ermittlung des aktuellen Biegewinkels gewährleistet ist.
Die Aufgabe der Erfindung wird gelöst durch ein Kalibrierverfahren für eine Biegemaschine mit einer Biegewinkel-Messvorrichtung, wobei der Biegemaschine ein maschinenfestes erstes Koordinatensystem zugeordnet ist und die Biegemaschine ferner eine Biegewerkzeuganordnung aufweist. Während der Durchführung einer Biegeumformung wird von einer Beleuchtungsvorrichtung der Biegewinkel-Messvorrichtung ein Lichtmuster auf eine Oberfläche eines in der Biegewerkzeuganordnung eingelegten Blechteils abgegeben. Ferner wird von einer Bilderfassungsvorrichtung der Biegewinkel-Messvorrichtung das Abbild des Lichtmusters auf der Blechoberfläche erfasst und von einem Auswertemodul das erfasste Abbild des Lichtmusters analysiert und daraus ein aktueller Biegewinkel ermittelt. Bei Übereinstimmung des aktuellen Biegewinkels mit einem, nach einem mathematischen Biegemodell ermittelten Soll-Biegewinkel, wird die Biegeumformung gestoppt. In einem Kalibriervorgang wird von der Beleuchtungsvorrichtung ein Lichtmuster auf ein Referenzmerkmal der Biegemaschine oder der Biegewerkzeuganordnung abgegeben und von der Bilderfassungsvorrichtung das Abbild des Lichtmusters am Referenzmerkmal erfasst. Vom Auswertemodul wird aus dem erfassten Abbild ein Referenzpunkt des Referenzmerkmals ermittelt, welcher Referenzpunkt im ersten Koordinatensystem festgelegt ist. Ferner wird vom Auswertemodul aus den Koordinaten des Referenzpunkts im ersten Koordinatensystem und einem, der Biegewinkel-Messvorrichtung fest zugeordneten zweiten Koordinatensystem, eine Transformationsmatrix ermittelt, welche Transformationsmatrix an eine Maschinensteuerung der Biegemaschine übermittelt wird und von dieser im Modell der Biegeumformung berücksichtigt wird.

Der Vorteil dieser Ausführung liegt darin, dass mit einer Vorrichtung sowohl eine Überwachung des sich während der Biegung einstellenden Biegewinkels, als auch eine Kalibrierung des Messsystems durchgeführt werden kann.

Beim Einbau einer vorab kalibrierten optischen Biegewinkel-Messvorrichtung in eine Biegemaschine können Toleranzen auftreten, die im Betrieb zu einer Verfälschung des ermittelten Biegewinkels führen können. Daher ist eine Referenzierung der Biegewinkel-Messvorrichtung in Einbaulage vorteilhaft, um diese auftretenden Ungenauigkeiten kompensieren zu können. Für eine exakte Referenzierung ist ein bekanntes und im ersten Koordinatensystem der Biegemaschine eindeutig definiertes Referenzmerkmal erforderlich.

Gemäß dem gegenständlichen Verfahren wird nach Einbau des vorab kalibrierten Winkelmesssystems in die Biegemaschine, eine Referenzierung durchgeführt. Dazu wird zwischen einem Referenzpunkt im ersten Koordinatensystem der Biegemaschine und dem zweiten Koordinatensystem der Biegewinkel-Messvorrichtung, eine Transformationsmatrix ermittelt. Diese Transformationsmatrix definiert den Bezug zwischen erstem und zweitem Koordinatensystem und wird im mathematischen Modell der Biegung berücksichtigt. Somit fließt diese Korrektur bei allen folgenden Biegeumformungen in die ermittelten Biegeparameter ein.

Im ersten Koordinatensystem sind die wesentlichen Abmessungen und Abstände der Biegemaschine festgelegt, insbesondere ist festgelegt, wo sich die Biegelinie befindet.

Die grundlegende Funktionsweise einer Biegemaschine wird hierin als bekannt angesehen. Insbesondere ist bekannt, dass eine Maschinensteuerung über Antriebsmittel eine Bewegung des Pressenbalkens bzw. der Schwenkbacke bewirkt und so die Biegeumformung durchführt. Inkludiert ist hier auch die Ansteuerung von Klemm- und/oder Haltevorrichtungen, die das umzuformende Blech vor bzw. während der Durchführung der Biegeumformung in definierter Relation zur Biegewerkzeuganordnung halten. Insbesondere wird unter Ansteuerung durch die Maschinensteuerung verstanden, dass diese mittels elektrischer, pneumatischer und/oder hydraulischer Mittel bzw. Wandler, die Biegewerkzeuganordnung mit den ermittelten Biegeparametern auf das umzuformende Blechteil einwirken lässt. Das gegenständliche Verfahren ist für Biegemaschinen zum Freibiegen, Prägebiegen - allgemein zum Pressbiegen - und auch Schwenkbiegen verwendbar. Gegebenenfalls werden im weiteren Begrifflichkeiten des Freibiegens verwendet, die jedoch auf die gleichfalls vorhandenen Elemente einer Schwenkbiegemaschine umzulegen sind.

Ferner kann das Auswertemodul in der Maschinensteuerung oder in der Biegewinkel-Messvorrichtung integriert sein, oder als eigenständiges Modul existieren. Jedenfalls besteht eine Verbindung zur Maschinensteuerung, um die ermittelte Transformationsmatrix an die Maschinensteuerung übermitteln zu können bzw. können die Messwerte mit der ermittelten Transformation auch im Auswertemodul umgerechnet und dann an die Maschinensteuerung übertragen werden.

Nach einer Weiterbildung ist vorgesehen, dass das Referenzmerkmal durch eine Anschlagvorrichtung gebildet ist, welche beim Kalibriervorgang von der Maschinensteuerung in den Erfassungsbereich der Biegewinkel-Messvorrichtung bewegt wird. Beim Biegen wird das umzuformende Blechteil in die Werkzeuganordnung der Biegemaschine eingelegt und von der Maschinensteuerung eine Anschlagvorrichtung, insbesondere ein Hinteranschlag, gemäß der durchzuführenden Biegeumformung positioniert. Der Bediener legt dann das Blechteil an die Anschlagvorrichtung an und löst die Biegeumformung aus. Da die Anschlagvorrichtung bei der Inbetriebnahme der Biegemaschine bzw. in regelmäßigen Intervallen im ersten Koordinatensystem der Biegemaschine festgelegt wird, ist bei jeder Positionierung der Anschlagvorrichtung durch die Maschinensteuerung, die Position des Referenzmerkmals im ersten Koordinatensystem bekannt.

Alternativ ist nach einer Weiterbildung vorgesehen, dass das Referenzmerkmal durch ein Ober- und/oder Unterwerkzeug der Biegewerkzeuganordnung gebildet ist, welches beim Kalibriervorgang von der Maschinensteuerung in den Erfassungsbereich der Biegewinkel-Messvorrichtung bewegt wird. Da auch die Position des Ober- bzw. Unterwerkzeugs im ersten Koordinatensystem festgelegt ist, bspw. durch definierte Abmessungen der Werkzeuge, ist wiederum an jeder Verfahrposition das Werkzeug im ersten Koordinatensystem festgelegt.

Da wie zuvor die Anschlagvorrichtung, auch die Werkzeuge der Biegewerkzeuganordnung sehr markante strukturelle Merkmale aufweisen, insbesondere Kanten, und diese Merkmale durch die geometrische Bauform der Werkzeuganordnung festgelegt sind, ist darüber auch der Referenzpunkt des Referenzmerkmals eindeutig im ersten Koordinatensystem festgelegt.

Eine Weiterbildung besteht auch darin, dass als Lichtmuster eine Helligkeitsverteilung mit einem hohen lokalen Kontrast abgegeben wird. Um die Position des Referenzmerkmals eindeutig und insbesondere sehr genau erfassen zu können, ist es bei einer optischen Erfassungsvorrichtung von Vorteil, wenn sich das zu erfassende bzw. zu findende Merkmal deutlich von der Umgebung abhebt.

Durch die Längserstreckung der Werkzeuganordnung wird bei einer Biegemaschine auch die Biegelinie festgelegt, entlang der ein Blechteil gebogen werden kann. Aufgrund von Justageungenauigkeiten und/oder durch Dejustage während des Betriebs, kann es vorkommen, dass sich längs dieser Erstreckung der Abstand zwischen der Biegewinkel-Messvorrichtung und der Biegemaschine ändert. Daher ist nach einer Weiterbildung vorgesehen, dass die Biegewinkel-Messvorrichtung parallel zu einer Längserstreckung der Werkzeuganordnung bewegt wird und längs dieser Längserstreckung eine Mehrzahl von Transformationsmatritzen ermittelt wird. Somit kann längs der Biegelinie ein Gitter von Transformationsmatritzen ermittelt werden, welche in das Biegemodell einfließen und eine korrekte Biegung ermöglichen.

Da es durch die mechanischen Belastungen beim Biegevorgang vorkommen kann, dass sich die geometrische Zuordnung zwischen erstem und zweitem Koordinatensystem ändert, ist nach einer Weiterbildung vorgesehen, dass die Bestimmung der Transformationsmatrix periodisch vor einem Biegevorgang durchgeführt wird. Somit lässt sich bspw. festlegen, dass nach einer Anzahl von Biegevorgängen die Kalibrierung erneut durchgeführt wird. Dies ist insbesondere automatisierbar, so dass der Bediener keine zusätzliche Handlung setzen muss.

Die Biegewinkel-Messvorrichtung ist bevorzugt in Richtung des Bleches ausgerichtet und ist somit ggf. für die Erfassung des Referenzmerkmals nicht optimal ausgerichtet. Daher ist nach einer Weiterbildung vorgesehen, dass die Biegewinkel-Messvorrichtung beim Kalibriervorgang verschwenkt wird, bevorzugt um eine zur Längserstreckung der Werkzeuganordnung parallele Achse. Somit ist in beiden Erfassungspositionen eine optimale Positionierung der Beleuchtungs- und der Bilderfassungsvorrichtung gewährleistet. Diese Verschwenkung erfolgt bevorzugt mittels eines Antriebsmittels, welches von der Maschinensteuerung angesteuert wird.
Eine Weiterbildung besteht darin, dass vom Auswertemodul mittels der Biegewinkel-Messvorrichtung ein Lichtschnittverfahren durchgeführt wird. Ein solches Verfahren ist besonders gut geeignet, Kanten zu finden. Da bei einer Biegemaschine aufgrund der konstruktiven bzw. einsatzgemäßen Gegebenheiten, insbesondere im Bereich der Biegewerkzeuganordnung, der Biegelinie bzw. des eingelegten Blechteil, eine Mehrzahl von Kanten vorhanden sind, ist das anspruchsgemäße Verfahren vorteilhaft.
Da für die Erfassung des Biegewinkels des sich aufbiegenden Bleches ggf. ein anderes Lichtmuster vorteilhaft ist, als für die Durchführung der Kalibration, ist gemäß einer Weiterbildung vorgesehen, dass das Lichtmuster von der Beleuchtungsvorrichtung für die Biegeumformung und für den Kalibriervorgang selektiv gewählt wird. Auch ist es somit möglich, dass Lichtmuster auf die spezifische Oberflächenstruktur des zu erfassenden Bleches bzw. Referenzmerkmals anzupassen.
Die Aufgabe der Erfindung wird auch durch eine Biegemaschine mit einer Biegewinkel-Messvorrichtung gemäß dem Anspruch 10 gelöst. Bei einer Biegemaschine gibt es vor bzw. während der Durchführung der Biegeumformung eine Mehrzahl sich gegeneinander bewegender Maschinenkomponenten, unabhängig ob es sich um eine Biegepresse oder eine Schwenkbiegemaschine handelt. Durch konstruktive Mittel ist jedoch gewährleistet, dass die Position der einzelnen Komponenten zueinander und insbesondere zum ruhenden Maschinenrahmen, jederzeit und insbesondere auch während einer Bewegung eindeutig bekannt ist. Insbesondere die Position der Komponenten der Biegemaschine im ersten Koordinatensystem, welches der Biegemaschine zugeordnet ist, festgelegt. Somit kann die Maschinensteuerung einen Biegevorgang reproduzierbar durchführen. Ein Hinteranschlag sowie das Ober- oder Unterwerkzeug finden beim bestimmungsgemäßen Einsatz einer Biegemaschine Verwendung, insbesondere sind diese Komponenten maßgeblich für die Ausbildung einer korrekten Biegeumformung. Daher sind die geometrischen Abmessungen diese Komponenten sehr exakt, ferner sind spezifische Merkmale dieser Komponenten exakt im ersten Koordinatensystem festgelegt. Beispielsweise muss die Arbeitskante eines Biegestempels exakt im ersten Koordinatensystem bekannt sein, da es sonst zu Fehlbiegungen kommen würde. Zusätzlich kann auch ein spezielles Kalibrierwerkzeug vorgesehen sein, welches in der Biegemaschine angeordnet werden kann und ebenfalls durch seine konstruktiven bzw. geometrischen Details, eindeutig im ersten Koordinatensystem festgelegt ist. Erfindungsgemäß ist nun vorgesehen, dass das Referenzmerkmal durch eines aus der Gruppe Hinteranschlag, Ober- oder Unterwerkzeug, Kalibrierwerkzeug gebildet ist. Bei dieser Ausbildung wird der Referenzpunkt durch eine ausgezeichnete Kante gebildet.
Es kann jedoch auch vorgesehen sein, dass das Referenzmerkmal durch eines aus der Gruppe Hinteranschlag und Unterwerkzeug, Unterwerkzeug und Blechteil, und Ober- und Unterwerkzeug gebildet ist. Mit dieser Ausbildung wird eine Steigerung der Erfassungssicherheit und damit der Genauigkeit erreicht, da jeweils ein Referenzpunkt von zwei Referenzmerkmalen ermittelt wird.
Unter dem Begriff Referenzpunkt ist insbesondere nicht nur die geometrische Ausbildung eines Punktes zu verstehen, sondern allgemein jener charakteristische Punkt eines Referenzmerkmals, der zur Bestimmung desselben im ersten Koordinatensystem herangezogen wird.

Somit kann ein Referenzpunkt auch durch eine Kante, bspw. des Hinteranschlags, gebildet sein.

Zur Steigerung der Erfassungssicherheit ist nach einer Weiterbildung vorgesehen, dass am Referenzmerkmal ein reflektierender Bereich vorhanden ist, in welchem der Referenzpunkt angeordnet ist. Da eine Biegemaschine bzw. die Referenzmerkmale überwiegend aus Metall sind, weisen diese aufgrund der Oberflächenbeschaffenheit unter Umständen kritische optische Eigenschaften auf. Beispielsweise kann es zu einer örtlich stark schwankenden Rückstreuung kommen, sodass die Analyse des erfassten projizierten Lichtmusters schwierig und somit ungenau wird. Mit der anspruchsgemäßen Ausbildung wird erreicht, dass ein Bereich mit eindeutig definierten Reflexionseigenschaften vorhanden ist und somit die Auslesegenauigkeit verbessert wird. Der reflektierende Bereich kann nicht abschließend bspw. durch eine farbliche Hinterlegung, oder eine Spiegelfläche gebildet sein.

Ebenfalls zur Steigerung der Erfassungssicherheit kann vorgesehen sein, dass das von der Beleuchtungsvorrichtung auf das Referenzmerkmal abgegebene Lichtmuster, zumindest eine scharf abgegrenzte Lichtlinie aufweist. Beispielsweise kann von einem Laser eine Linie, mehrere parallele Linien oder ein Gitter projiziert werden. Somit wird im beleuchteten Abschnitt des Referenzmerkmals ein sehr hoher Kontrast erreicht.

Da sich für den Referenzpunkt am Referenzmerkmal bevorzugt solche Strukturen eignen, welche eine sprunghafte Änderung des Oberflächengradienten aufweisen, ist gemäß einer Weiterbildung vorgesehen, dass am Referenzmerkmal eine in Richtung der Biegewinkel-Messvorrichtung ausgerichtete Kante angeordnet ist.

Eine Weiterbildung besteht auch darin, dass das Referenzmerkmal bzw. der Referenzpunkt als Retroreflektor ausgebildet ist. Ein solcher Retroreflektor kann bspw. durch ein Reflexionsprisma oder einen Tripelspiegel gebildet sein und hat den Vorteil, dass jeder eintreffende Lichtstrahl, im Wesentlichen in dieselbe Richtung zurück reflektiert wird. Somit lässt sich das Referenzmerkmal oder der Referenzpunkt sehr genau bestimmen.

Von Vorteil ist ferner eine Weiterbildung, nach der die Beleuchtungsvorrichtung eine Vorrichtung zur Abgabe eines selektiven Lichtmusters aufweist. Somit kann für die Durchführung der Biegeumformung und für die Kalibrierung ein optimales Lichtmuster gewählt werden. Auch kann das Lichtmuster an die spezifischen Oberflächeneigenschaften der zu beleuchtenden Oberfläche angepasst werden.

Zum besseren Verständnis der Erfindung wird diese anhand der nachfolgenden Figuren näher erläutert.

Es zeigen jeweils in stark vereinfachter, schematischer Darstellung:
- Fig. 1: Eine mögliche Ausführung des gegenständlichen Kalibrierverfahrens unter Verwendung einer Anschlagvorrichtung;
- Fig. 2: Eine weitere mögliche Ausführung des gegenständlichen Kalibrierverfahrens unter Verwendung der Biegewerkzeuganordnung;
- Fig. 3: Eine weitere mögliche Ausführung des gegenständlichen Kalibrierverfahrens unter Verwendung des in die Biegewerkzeuganordnung eingelegten Bleches.

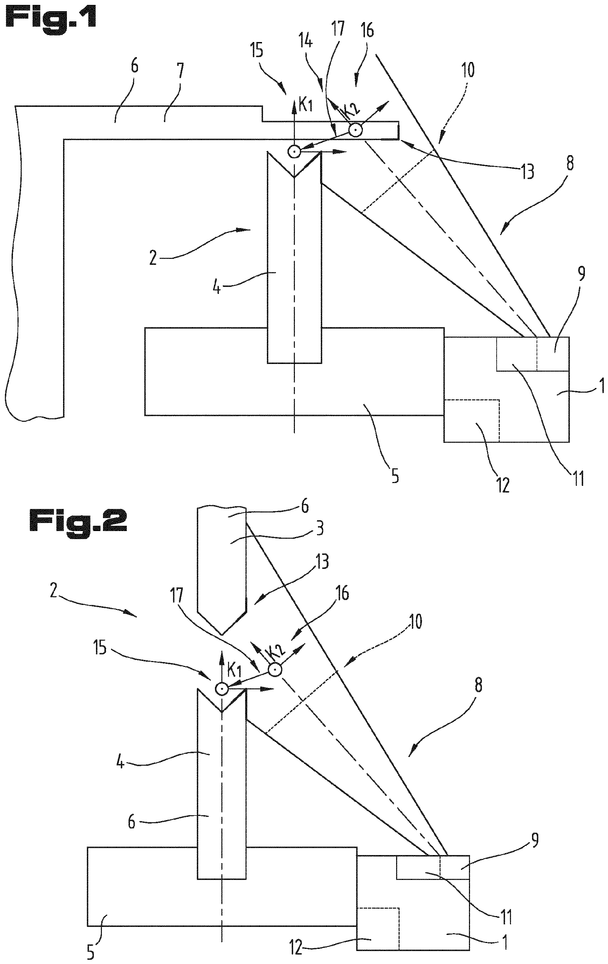

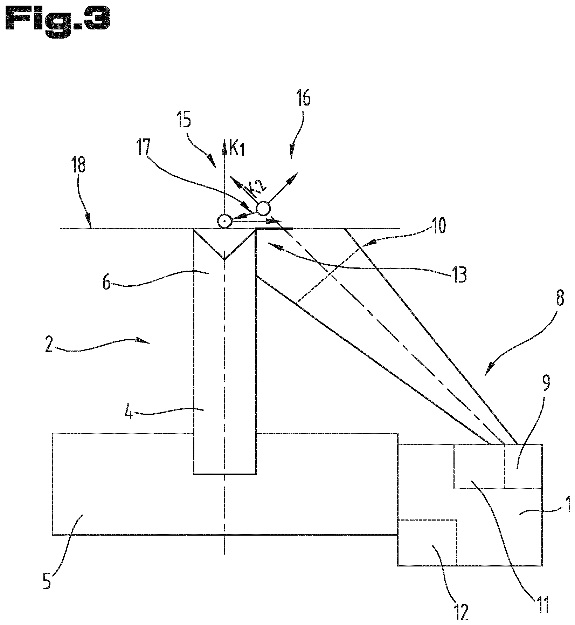

In den Fig. 1-3 ist die Situation für eine Biegepresse zum Freibiegen und/oder Prägebiegen dargestellt, wobei die Biegewerkzeuganordnung 2 zumindest ein Oberwerkzeug 3 und ein Unterwerkzeug 4 aufweist. Aus Vereinfachungsgründen ist in den Fig. 1 und 3 lediglich das Unterwerkzeug 4 dargestellt. Die Biegewerkzeuganordnung 2 ist am Maschinengestellt 5 angeordnet, welches, ebenfalls wieder aus Vereinfachungsgründen, in den Fig. 1-3 stark schematisiert dargestellt wird. Insbesondere sind sämtliche, zur Durchführung der Biegeumformung erforderliche Maschinenkomponenten der Biegemaschine, aus Vereinfachungsgründen nicht dargestellt.

Fig. 1 zeigt eine mögliche Ausführung einer Biegemaschine mit einer Biegewinkel-Messvorrichtung 1, wobei die Biegemaschine eine Biegewerkzeuganordnung 2 aufweist. Das Referenzmerkmal 6 ist in dieser Ausführungsvariante durch eine Anschlagvorrichtung 7, insbesondere einen Hinteranschlag gebildet wird. Zur Durchführung des Kalibrierverfahrens ist die Anschlagvorrichtung 7 von der Maschinensteuerung der Biegemaschine in den Erfassungsbereich 8 der Biegewinkel-Messvorrichtung 1 bewegt worden.

Während der Durchführung der Biegeumformung wird von einer Beleuchtungsvorrichtung 9 ein Lichtmuster auf die zu erfassende Blechoberfläche abgegeben. Die vom Lichtmuster beleuchtete Blechoberfläche wird von einer Bilderfassungsvorrichtung 11 erfasst, wobei ferner ein Auswertemodul 12 aus dem erfassten Abbild einen aktuellen Ist-Biegewinkel ermittelt.

Im Kalibriervorgang wird nun von der Beleuchtungsvorrichtung 9 ebenfalls ein Lichtmuster 10, auf das in den Erfassungsbereich 8 der Biegewinkel-Messvorrichtung 1 bewegten Referenzmerkmals 6 gerichtet und das projizierte Abbild des Lichtmusters 10 von der Bilderfassungsvorrichtung 11 erfasst. Vom Auswertemodul 12 wird daraufhin im erfassten Abbild ein Referenzpunkt 13 des Referenzmerkmals 6 erfasst, wobei sich dieser Referenzpunkt 13 dadurch auszeichnet, dass dieser als eindeutiges Merkmal am Referenzmerkmal 6 zuverlässig detektierbar ist. Im Fall der dargestellten Anschlagvorrichtung 7 kann dies beispielsweise eine Kante eines Anschlagfingers 14 der Anschlagvorrichtung 7 sein. Es sei hier nochmals darauf hingewiesen, dass unter Referenzpunkt nicht nur ein Punkt im mathematischen Sinne zu verstehen ist, sondern dass dadurch ein ausgezeichnetes Merkmal gekennzeichnet ist und es sich somit auch, wie im gegenständlichen Fall, um eine Kante bzw. Linie handeln kann. Bei der Inbetriebnahme der Biegemaschine wird der Biegemaschine ein erstes Koordinatensystem 15 zugeordnet. Somit ist das Referenzmerkmal 6 und insbesondere der Referenzpunkt 13, eindeutig im ersten Koordinatensystem 15 festgelegt. Ebenso ist der Biegewinkel-Messvorrichtung 1 ein zweites Koordinatensystem 16 zugeordnet, wodurch jeder erfasste Punkt im Erfassungsbereich 8 eindeutig im zweiten Koordinatensystem 16 festgelegt ist. Nach dem gegenständlichen Verfahren wird nun zwischen erstem 15 und zweitem 16 Koordinatensystem eine Transformationsmatrix 17 ermittelt.

Durch die festgelegte Zuordnung des Referenzpunktes 13 im ersten Koordinatensystem 15 der Biegemaschine und der ermittelten Transformationsmatrix 17 kann nun in allen nachfolgenden Biegeumformungen der von der Biegewinkelmessvorrichtung 1 erfasste Biegewinkel um die Transformationsmatrix 17 korrigiert werden, sodass Positionsabweichungen der Biegewinkel-Messvorrichtung 1 von der erwarteten bzw. hinterlegten Relativposition im Bezug zur Biegemaschine, korrigiert werden können.

Fig. 1 zeigt eine weitere mögliche Ausführung, bei der nicht nur die Anschlagvorrichtung 7 als Referenzmerkmal 6 dient, sondern wo auch das Unterwerkzeug 4 der Biegewerkzeuganordnung 2 als Referenzmerkmal mit einem Referenzpunkt herangezogen wird. Beispielsweise kann eine Kante der Biegeausnehmung des Unterwerkzeugs 4 zusätzlich als Referenzpunkt herangezogen werden und erhöht somit die Kalibriergenauigkeit. Die Verwendung des Unterwerkzeugs 4 als Referenzmerkmal hat des Weiteren den Vorteil, dass sich dieses Unterwerkzeug 4 zumeist auch während der Durchführung der Biegeumformung im Erfassungsbereich 8 der Biegewinkel-Messvorrichtung 1 befindet und somit auch während der Durchführung der Biegeumformung eine Prüfung der Kalibration möglich wird.

Fig. 2 zeigt eine weitere mögliche Ausführung, bei der das Ober- 3 und das Unterwerkzeug 4 der Biegewerkzeuganordnung 2 als Referenzmerkmal dienen. Da die Werkzeuge der Biegewerkzeuganordnung 2 zumeist mechanisch sehr genau gearbeitet sind und hinsichtlich ihrer geometrischen Abmessungen genau bekannt sind, ist somit auch der bzw. sind die Referenzpunkte 13 im ersten Koordinatensystem 15 der Biegemaschine genau bekannt. Beispielsweise kann nun von der Biegemaschine das Oberwerkzeug 3 in einem definierten Abstand zum Unterwerkzeug 4 positioniert werden, woraufhin anschließend im Kalibriervorgang von der Biegewinkel-Messvorrichtung 1 der bzw. die beiden Referenzpunkte 13 im zweiten Koordinatensystem 16 der Biegewinkel-Messvorrichtung 1 festgelegt werden. Somit kann wiederum eine Transformationsmatrix 17 ermittelt werden und dieser, während der Durchführung der Biegeumformung, auf den von der Biegewinkel-Messvorrichtung 1 ermittelten Biegewinkel angewendet werden.

Fig. 3 zeigt eine weitere mögliche Ausführung, wie das gegenständliche Kalibrierverfahren an einer Biegemaschine ausgeführt werden kann. In der dargestellten Ausführung wird das Referenzmerkmal 6 beispielsweise durch das Unterwerkzeug 4 und das darin eingelegte umzuformende Blechteil 18 gebildet. Insbesondere bildet sich hier genau an der Kante zwischen dem Unterwerkzeug 4 und dem Blechteil 18 ein sehr markanter Referenzpunkt 13 aus, der bei Beleuchtung mit dem Leuchtmuster 10 gut in Erscheinung tritt. Der Bereich des Referenzpunktes 13 ist durch das Blechteil 18 gegenüber dem von oben einfallenden Umgebungslicht abgedeckt, wodurch sich der Referenzpunkt 13 durch einen hohen Kontrast abheben wird.

Nicht dargestellt ist die Situation an einer Schwenkbiegemaschine, da die grundlegenden Merkmale und Anordnungen denen bei einer Biegepresse gleich bzw. sehr ähnlich sind, sodass ein Fachmann die in den Fig. 1-3 dargestellten Ausführungsvarianten auch auf eine Schwenkbiegemaschine umlegen könnte. Das Blech wird bei einer Schwenkbiegemaschine zwischen dem oberen und unteren Niederhaltewerkzeug gehalten und von einem oberen bzw. unteren Biegewangenwerkzeug in die gewünschte Richtung gebogen. Da bei der Erfassung des Biegewinkels während der Durchführung der Biegeumformung von der Biegewinkelmessvorrichtung die durch das obere bzw. untere Biegewangenwerkzeug gebogene Blechoberfläche erfasst wird und daraus der aktuelle Biegewinkel ermittelt wird, kann mit dem gegenständlichen Kalibrierverfahren auch hier ein Referenzpunkt im ersten Koordinatensystem der Schwenkbiegemaschine über eine ermittelte Transformationsmatrix im zweiten Koordinatensystem der Biegewinkel-Messvorrichtung bzw. im Bezug zu diesem zweiten Koordinatensystem, festgelegt werden.

Die Beleuchtungsvorrichtung der Biegewinkelmessvorrichtung richtet während der Durchführung der Biegeumformung ein Lichtmuster auf die Blechoberfläche des umzuformenden Blechteils und während des Kalibriervorgangs ein Lichtmuster auf das Referenzmerkmal. Dabei kann es sich in beiden Fällen um dasselbe Lichtmuster handeln, es ist jedoch auch möglich, dass für den Kalibriervorgang ein anderes, abweichendes Lichtmuster verwendet wird, beispielsweise eine Lichtlinie, welche einen starken lokalen Kontrast aufweist und sich somit bevorzugt zur Detektion von Linien und Kanten eignet.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In den Fig. 2 und 3 sind weitere und gegebenenfalls für sich eigenständige Ausführungsformen des Kalibrierverfahrens gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Fig. hingewiesen bzw. Bezug genommen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Kalibrierverfahrens an einer BIegemaschine diese bzw. deren Bestandteile teilweise unmaßstäblich und/oder vergrößert und/oder verkleinert dargestellt wurden.

### Bezugszeichenaufstellung

- 1: Biegewinkel-Messvorrichtung
- 2: Biegewerkzeuganordnung
- 3: Oberwerkzeug
- 4: Unterwerkzeug
- 5: Maschinengestell
- 6: Referenzmerkmal
- 7: Anschlagvorrichtung
- 8: Erfassungsbereich
- 9: Beleuchtungsvorrichtung
- 10: Lichtmuster
- 11: Bilderfassungsvorrichtung
- 12: Auswertemodul
- 13: Referenzpunkt
- 14: Anschlagfinger
- 15: erstes Koordinatensystem
- 16: zweites Koordinatensystem
- 17: Transformationsmatrix
- 18: Blechteil

## Patentansprüche

1. Kalibrierverfahren für eine Biegemaschine mit einer Biegewinkel-Messvorrichtung (1), wobei der Biegemaschine ein maschinenfestes erstes Koordinatensystem (15) zugeordnet ist, und die Biegemaschine ferner eine Biegewerkzeuganordnung (2) aufweist, wobei während der Durchführung einer Biegeumformung:
• von einer Beleuchtungsvorrichtung (9) der Biegewinkel-Messvorrichtung (1) ein Lichtmuster (10) auf eine Oberfläche eines in der Biegewerkzeuganordnung (2) eingelegten Blechteils abgegeben wird;
• von einer Bilderfassungsvorrichtung (11) der Biegewinkel-Messvorrichtung (1) das Abbild des Lichtmusters (10) auf der Blechoberfläche erfasst wird;
• und von einem Auswertemodul (12) das erfasste Abbild des Lichtmusters (10) analysiert und daraus ein aktueller Ist-Biegewinkel ermittelt wird;
• und bei Übereinstimmung des aktuellen Ist-Biegewinkels mit einem, nach einem mathematischen Biegemodell ermittelten Soll-Biegewinkel, die Biegeumformung gestoppt wird;
**dadurch gekennzeichnet, dass**
in einem Kalibriervorgang:
• von der Beleuchtungsvorrichtung (9) das Lichtmuster (10) auf ein Referenzmerkmal (6) der Biegemaschine oder der Biegewerkzeuganordnung (2) abgegeben wird;
• von der Bilderfassungsvorrichtung (11) das Abbild des Lichtmusters (10) am Referenzmerkmal (6) erfasst wird;
• und vom Auswertemodul (12) aus dem erfassten Abbild ein Referenzpunkt (13) des Referenzmerkmals (6) ermittelt wird, welcher Referenzpunkt (13) im ersten Koordinatensystem (15) festgelegt ist;
• und vom Auswertemodul (12) aus den Koordinaten des Referenzpunkts (13) im ersten Koordinatensystem und einem, der Biegewinkel-Messvorrichtung (1) fest zugeordneten zweiten Koordinatensystem, eine Transformationsmatrix (17) ermittelt wird;
• und die Transformationsmatrix (17) an eine Maschinensteuerung der Biegemaschine übermittelt wird und von dieser im Biegemodell der Biegeumformung berücksichtigt wird.

2. Kalibrierverfahren nach Anspruch 1, **dadurch gekennzeichnet, dass** das Referenzmerkmal (6) durch eine Anschlagvorrichtung (7) gebildet ist, welche beim Kalibriervorgang von der Maschinensteuerung in den Erfassungsbereich der Biegewinkel-Messvorrichtung (1) bewegt wird.

3. Kalibrierverfahren nach Anspruch 1, **dadurch gekennzeichnet, dass** das Referenzmerkmal (6) durch ein Ober- (3) und/oder Unterwerkzeug (4) der Biegewerkzeuganordnung (2) gebildet ist, welches beim Kalibriervorgang von der Maschinensteuerung in den Erfassungsbereich der Biegewinkel-Messvorrichtung (1) bewegt wird.

4. Kalibrierverfahren nach einem der Ansprüche 1 bis 3, **dadurch gekennzeichnet, dass** als Lichtmuster (10) eine Helligkeitsverteilung mit einem hohen lokalen Kontrast abgegeben wird.

5. Kalibrierverfahren nach einem der Ansprüche 1 bis 4, **dadurch gekennzeichnet, dass** die Biegewinkel-Messvorrichtung (1) parallel zu einer Längserstreckung der Werkzeuganordnung bewegt wird und längs dieser Längserstreckung eine Mehrzahl von Transformationsmatritzen (17) ermittelt wird.

6. Kalibrierverfahren nach einem der Ansprüche 1 bis 5, **dadurch gekennzeichnet, dass** die Bestimmung der Transformationsmatrix (17) periodisch vor einem Biegevorgang durchgeführt wird.

7. Kalibrierverfahren nach einem der Ansprüche 1 bis 6, **dadurch gekennzeichnet, dass** die Biegewinkel-Messvorrichtung (1) beim Kalibriervorgang verschwenkt wird, bevorzugt um eine zur Längserstreckung der Werkzeuganordnung parallele Achse.

8. Kalibrierverfahren nach einem der Ansprüche 1 bis 7, **dadurch gekennzeichnet, dass** vom Auswertemodul (12) mittels der Biegewinkel-Messvorrichtung (1) ein Lichtschnittverfahren durchgeführt wird.

9. Kalibrierverfahren nach einem der Ansprüche 1 bis 8, **dadurch gekennzeichnet, dass** das Lichtmuster (10) von der Beleuchtungsvorrichtung (9) für die Biegeumformung und für den Kalibriervorgang selektiv gewählt wird.

10. Biegemaschine mit einer Biegewinkel-Messvorrichtung (1), zur Durchführung eines Kalibrierverfahrens nach einem der Ansprüche 1 bis 9,
wobei die Biegemaschine eine Biegewerkzeuganordnung (2) aufweist, welche Biegewerkzeuganordnung (2) ein Ober- (3) und ein Unterwerkzeug (4) aufweist und in einem Arbeitsschritt, die Biegeumformung an dem, in die Biegewerkzeuganordnung (2) eingelegten Blech durchführt,
und wobei die Biegewinkel-Messvorrichtung (1) eine Beleuchtungs- und eine Bilderfassungsvorrichtung (11) aufweist, und dass
der Biegemaschine ein maschinenfestes erstes Koordinatensystem (15), und
der Biegewinkel-Messvorrichtung (1) ein zweites Koordinatensystem (16) zugeordnet ist,
**dadurch gekennzeichnet, dass**
die Biegemaschine ferner ein Referenzmerkmal (6) mit einem Referenzpunkt (13) aufweist,
wobei das Referenzmerkmal (6) durch eine Anschlagvorrichtung (7) oder durch das Ober- (3) und/oder das Unterwerkzeug (4) oder durch ein Kalibrierwerkzeug gebildet ist, und
wobei der Referenzpunkt (13) koordinatenfest bezüglich des ersten Koordinatensystems (15) ist, und
dass ein Auswertemodul (12) vorgesehen ist, welches zur Bildung einer Transformationsmatrix (17), aus den Koordinaten des Referenzpunkts (13) im ersten Koordinatensystem und dem, der Biegewinkel-Messvorrichtung (1) fest zugeordneten zweiten Koordinatensystem, ausgebildet ist.

11. Biegemaschine nach Anspruch 10, **dadurch gekennzeichnet, dass** das Referenzmerkmal (6) durch eines aus der Gruppe Anschlagvorrichtung (7) und Unterwerkzeug (4), Unterwerkzeug (4) und Blechteil, Ober- (3) und Unterwerkzeug (4) gebildet ist.

12. Biegemaschine nach einem der Ansprüche 10 oder 11, **dadurch gekennzeichnet, dass** am Referenzmerkmal (6) ein reflektierender Bereich vorhanden ist, in welchem der Referenzpunkt (13) angeordnet ist.

13. Biegemaschine nach einem der Ansprüche 10 bis 12, wobei von der Beleuchtungsvorrichtung (9) ein Lichtmuster (10) auf das Referenzmerkmal (6) abgegeben wird, **dadurch gekennzeichnet, dass** das Lichtmuster (10) zumindest eine scharf abgegrenzte Lichtlinie aufweist.

14. Biegemaschine nach einem der Ansprüche 10 bis 13, **dadurch gekennzeichnet, dass** am Referenzmerkmal (6) eine in Richtung der Biegewinkel-Messvorrichtung (1) ausgerichtete Kante angeordnet ist.

15. Biegemaschine nach einem der Ansprüche 10 bis 14, **dadurch gekennzeichnet, dass** das Referenzmerkmal (6) bzw. der Referenzpunkt (13) als Retroreflektor ausgebildet ist.

16. Biegemaschine nach einem der Ansprüche 10 bis 15, **dadurch gekennzeichnet, dass** die Beleuchtungsvorrichtung (9) eine Vorrichtung zur Abgabe eines selektiven Lichtmusters (10) aufweist.

## Claims

1. A calibration method for a bending machine having a bending angle measuring device (1), wherein a machine-based first coordinate system (15) is associated with the bending machine, and the bending machine further having a bending tool arrangement (2), wherein during the execution of a bending process:
• a light pattern (10) is emitted from an illumination device (9) of the bending angle measuring device (1) onto a surface of a sheet metal part placed in the bending tool arrangement (2);
• the image of the light pattern (10) on the sheet surface is detected by an image capturing device (11) of the bending angle measuring device (1);
• and the detected image of the light pattern (10) is analyzed by an evaluation module (12) and a current actual bending angle is determined therefrom;
• and if the current actual bending angle corresponds to a target bending angle determined according to a mathematical bending model, the bending process is stopped;
**characterized in that**
in a calibration process:
• the light pattern (10) is emitted by the illumination device (9) onto a reference feature (6) of the bending machine or the bending tool arrangement (2);
• the image of the light pattern (10) on the reference feature (6) is detected by the image capturing device (11);
• and a reference point (13) of the reference feature (6) is determined by the evaluation module (12) from the captured image, which reference point (13) is defined in the first coordinate system (15);
• and a transformation matrix (17) is determined by the evaluation module (12) from the coordinates of the reference point (13) in the first coordinate system and from a second coordinate system permanently associated with the bending angle measuring device (1);
• and the transformation matrix (17) is transmitted to a machine control of the bending machine and is taken into account by the machine control in the bending model of the bending process.

2. The calibration method according to claim 1, **characterized in that** the reference feature (6) is formed by a stop device (7) which is moved during the calibration process by the machine control into the detection range of the bending angle measuring device (1).

3. The calibration method according to claim 1, **characterized in that** the reference feature (6) is formed by an upper (3) and/or lower tool (4) of the bending tool arrangement (2), which during the calibration process is moved by the machine control into the detection range of the bending angle measuring device (1).

4. The calibration method according to any one of claims 1 to 3, **characterized in that** a brightness distribution with a high local contrast is emitted as a light pattern (10).

5. The calibration method according to any one of claims 1 to 4, **characterized in that** the bending angle measuring device (1) is moved parallel to a longitudinal extent of the tool arrangement, and a plurality of transformation matrices (17) is determined along this longitudinal extent.

6. The calibration method according to any one of claims 1 to 5, **characterized in that** the determination of the transformation matrix (17) is carried out periodically before a bending process.

7. The calibration method according to any one of claims 1 to 6, **characterized in that** the bending angle measuring device (1) is pivoted during the calibration process, preferably about an axis parallel to the longitudinal extent of the tool arrangement.

8. The calibration method according to any one of claims 1 to 7, **characterized in that** a light section method is carried out by the evaluation module (12) by means of the bending angle measuring device (1).

9. The calibration method according to any one of claims 1 to 8, **characterized in that** the light pattern (10) is selectively selected by the illumination device (9) for the bending process and for the calibration process.

10. A bending machine having a bending angle measuring device (1) for carrying out a calibration method according to any one of claims 1 to 9,
wherein the bending machine has a bending tool arrangement (2), which bending tool arrangement (2) has an upper (3) and a lower tool (4) and carries out the bending on the sheet metal placed in the bending tool arrangement (2) in one work step,
and wherein the bending angle measuring device (1) comprises an illumination device and an image capturing device (11), and that
a machine-based first coordinate system (15) is associated with the bending machine and
wherein a second coordinate system (16) is associated with the bending angle measuring device (1),
**characterized in that**
the bending machine further has a reference feature (6) with a reference point (13), wherein the reference feature (6) is formed by a stop device (7) or by the upper (3) and/or the lower tool (4) or by a calibration tool, and
wherein the reference point (13) is a fixed coordinate with respect to the first coordinate system (15), and **in that**
an evaluation module (12) is provided for forming a transformation matrix (17) from the coordinates of the reference point (13) in the first coordinate system and from the second coordinate system permanently associated with the bending angle measuring device (1).

11. The bending machine according to claim 10, **characterized in that** the reference feature (6) is formed by one from the group consisting of the stop device (7) and lower tool (4), lower tool (4) and sheet metal part, upper (3) and lower tool (4).

12. The bending machine according to one of claims 10 or 11, **characterized in that** on the reference feature (6) there is a reflecting region in which the reference point (13) is arranged.

13. The bending machine according to any one of claims 10 to 12, wherein a light pattern (10) is emitted from the illumination device (9) onto the reference feature (6), **characterized in that** the light pattern (10) has at least one sharply defined light line.

14. The bending machine according to any one of claims 10 to 13, **characterized in that** an edge aligned in the direction of the bending angle measuring device (1) is arranged on the reference feature (6).

15. The bending machine according to any one of claims 10 to 14, **characterized in that** the reference feature (6) or the reference point (13) is formed as a retroreflector.

16. The bending machine according to any one of claims 10 to 15, **characterized in that** the illumination device (9) comprises a device for emitting a selective light pattern (10).

## Revendications

1. Procédé de calibrage pour une machine de pliage avec un dispositif de mesure d'angle de pliage (1), un premier système de coordonnées (15) solidaire de la machine correspondant à la machine de pliage et la machine de pliage comprenant en outre une première disposition d'outils de pliage (2), moyennant quoi pendant l'exécution du formage par pliage :
• un motif lumineux (10) est émis, par un dispositif d'éclairage (9) du dispositif de mesure d'angle de pliage (1), vers une surface d'une pièce de tôle insérée dans la disposition d'outils de pliage (2) ;
• la représentation du motif lumineux (10) sur la surface de la tôle être capturée par un dispositif de capture d'image (11) du dispositif de mesure d'angle de pliage (1) ;
• et la représentation capturée du motif lumineux (10) est analysée par un module d'analyse (12) et un angle de pliage effectif actuel en est déduit ;
• et dans le cas d'une correspondance de l'angle de pliage effectif actuel avec un angle de pliage de consigne déterminer selon un modèle de pliage mathématique, le formage par pliage est arrêté ;
**caractérisé en ce que**
dans un processus de calibrage :
• le motif lumineux (10) est émis par le dispositif d'éclairage (9) vers une caractéristique de référence (6) de la machine de pliage ou de la disposition d'outils de pliage (2) ;
• la représentation du motif lumineux (10) sur la caractéristique de référence (6) est capturée par le dispositif de capture d'image (11) ;
• et un point de référence (13) de la caractéristique de référence (6) est déterminé par le module d'analyse (12) à partir de la représentation capturée, ce point de référence (13) étant déterminé dans le premier système de coordonnées (15) ;
• et une matrice de transformation (17) est déterminée par le module d'analyse (12) à partir des coordonnées du point de référence (13) dans le premier système de coordonnées et dans un deuxième système de coordonnées solidaire avec le dispositif de mesure d'angle de pliage (1) ;
• et la matrice de transformation (17) est transmise à un dispositif de commande de la machine de pliage et est prise en compte par celui-ci dans le modèle de pliage du formage par pliage.

2. Procédé de calibrage selon la revendication 1, **caractérisé en ce que** la caractéristique de référence (6) est constituée d'un dispositif de butée (7) qui est déplacé lors du processus de calibrage par le dispositif de commande dans la plage de mesure du dispositif de mesure d'angle de pliage (1).

3. Procédé de calibrage selon la revendication 1, **caractérisé en ce que** la caractéristique de référence (6) est constituée d'un outil supérieur (3) et/ou d'un outil inférieur (4) de la disposition d'outils de pliage (2), qui est déplacé lors du processus de calibrage par le dispositif de commande dans la plage de mesure du dispositif de mesure d'angle de pliage (1).

4. Procédé de calibrage selon l'une des revendications 1 à 3, **caractérisé en ce que**, en tant que motif lumineux (10), une répartition de la luminosité est émise avec un contraste local élevé.

5. Procédé de calibrage selon l'une des revendications 1 à 4, **caractérisé en ce que** le dispositif de mesure d'angle de pliage (1) est déplacé parallèlement à une extension longitudinale de la disposition d'outil et, le long de cette extension longitudinale, une pluralité de matrices de transformation (17) sont déterminées.

6. Procédé de calibrage selon l'une des revendications 1 à 5, **caractérisé en ce que** la détermination de la matrice de transformation (17) est effectuée périodiquement avant un processus de pliage.

7. Procédé de calibrage selon l'une des revendications 1 à 6, **caractérisé en ce que** le dispositif de mesure d'angle de pliage (1) est pivoté lors du processus de calibrage, de préférence autour d'un axe parallèle à l'extension longitudinale de la disposition d'outil.

8. Procédé de calibrage selon l'une des revendications 1 à 7, **caractérisé en ce qu'**un procédé de section lumineuse est exécuté par le module d'analyse (12) au moyen du dispositif de mesure d'angle de pliage (1).

9. Procédé de calibrage selon l'une des revendications 1 à 8, **caractérisé en ce que** le motif lumineux (10) est sélectionné par le dispositif d'éclairage (9) pour le formage par pliage et pour le processus de calibrage.

10. Machine de pliage avec un dispositif de mesure d'angle de pliage (1) pour l'exécution d'un procédé de calibrage selon l'une des revendications 1 à 9,
la machine de pliage comprenant une disposition d'outils de pliage (2), cette disposition d'outils de pliage (2) comprenant un outil supérieur (3) et/ou un outil inférieur (4) et effectue, dans une première étape de travail, le formage par pliage sur la tôle insérée dans la disposition d'outils de pliage (2),
et le dispositif de mesure d'angle de pliage (1) comprenant un dispositif d'éclairage et de capture d'image (11) et en ce que
un premier système de coordonnées solidaire avec la machine (15) correspondant à la machine de pliage et un deuxième système de coordonnées (16) correspondant au dispositif de mesure d'angle de pliage (1),
**caractérisée en ce que**
la machine de pliage comprend en outre une caractéristique de référence (6) avec un point de référence (13),
la caractéristique de référence (6) étant constituée d'un dispositif de butée (7) ou de l'outil supérieur (3) et/ou de l'outil inférieur (4) ou d'un outil de calibrage et
le point de référence (13) présentant des coordonnées fixes par rapport au premier système de coordonnées (15) et **en ce que**
un module d'analyse (12) est prévu, qui est conçu pour la formation d'une matrice de transformation (17), à partir des coordonnées du point de référence (13) dans le premier système de coordonnées et dans le deuxième système de coordonnées, solidaire avec le dispositif de mesure d'angle de pliage (1).

11. Machine de pliage selon la revendication 10, **caractérisée en ce que** la caractéristique de référence (6) est constituée d'un élément parmi le groupe constitué du dispositif de butée (7) et de l'outil inférieur (4), de l'outil inférieur (4) et de la pièce en tôle, de l'outil supérieur (3) et de l'outil inférieur (4).

12. Machine de pliage selon l'une des revendications 10 ou 11, **caractérisée en ce que**, sur la caractéristique de référence (6) est prévue une partie réfléchissante, dans laquelle le point de référence (13) est disposé.

13. Machine de pliage selon l'une des revendications 10 à 12, un motif lumineux (10) étant émis par le dispositif d'éclairage (9) sur la caractéristique de référence (6), **caractérisée en ce que** le motif lumineux (10) comprend au moins une ligne lumineuse nettement délimitée.

14. Machine de pliage selon l'une des revendications 10 à 13, **caractérisée en ce que**, sur la caractéristique de référence (6) se trouve une arête orientée en direction du dispositif de mesure d'angle de pliage (1).

15. Machine de pliage selon l'une des revendications 10 à 14, **caractérisée en ce que** la caractéristique de référence (6) ou le point de référence (13) est conçu comme un rétro-réflecteur.

16. Machine de pliage selon l'une des revendications 10 à 15, **caractérisée en ce que** le dispositif d'éclairage (9) comprend un dispositif pour l'émission d'un motif lumineux (10) sélectif.
